# EUROPÄISCHE PATENTANMELDUNG

(11) **EP 0 677 664 A1**
(43) Veröffentlichungstag der Anmeldung: **18.10.1995**
(21) Anmeldenummer: 95103964.3
(22) Anmeldetag: 17.03.1995
(51) Int. Cl.: F16B 13/06

(54) **Befestigungselement zum Einbringen in eine Bohrung**

(30) Priorität: 17.03.1994 DE 4409171
(71) Anmelder: BASF AKTIENGESELLSCHAFT, D-67056 Ludwigshafen (DE)
(72) Erfinder: Solle, Heinz-Georg, D-67112 Mutterstadt (DE)
(74) Vertreter: Geissler, Bernhard, Dr.

(57) **Zusammenfassung**

Es wird ein Befestigungselement zum Einbringen in eine Bohrung und ein Verfahren zum Fixieren eines Befestigungselements in einer Bohrung vorgeschlagen. Dabei wird eine spreizbare Hülse (1) beim Ziehen eines axial beweglichen Ankers (2), in Richtung aus der Bohrung, in der Bohrung fixiert, wobei alle Elemente des Befestigungselements aus Kunststoff bestehen können.

## Beschreibung

Die Erfindung betrifft ein Befestigungselement zum Einbringen in eine Bohrung oder Ausnehmung, das eine Hülse und einen axial beweglichen Anker aufweist.

Als Befestigungsmittel haben sich vor allem verschiedene Ausgestaltungen von Nietverbindungen, Kombinationen von Schraube/Mutter und Schraube/Dübel durchgesetzt. In der Praxis findet die Kombination aus Spreizdübel und Schraube wegen ihres günstigen Verhältnisses zwischen Preis und Leistung im Bau- und Hobbybereich breite Anwendung. Dagegen werden in der Fertigungstechnik (Fahrzeug-, Maschinen- und Möbelbau) Kombinationen von Schraube/Bolzen und Mutter, Nietverbindungen und Clipsverbindungen bevorzugt. Dabei sind Kunststoffwerkstoffe gerade für den Einsatz bei einem aus Schraube (Gewindestab) und Mutter bestehenden Befestigungselement weniger geeignet.

Aufgabe der Erfindung ist es, Mittel anzugeben, um Gegenstände aneinander bzw. an einer Wand zu befestigen. Bevorzugt ist es dabei ein Befestigungselement und ein Verfahren zum Fixieren eines Befestigungselements zur Verfügung zu stellen, insbesondere derart, daß auf einen metallischen Verbindungsstift verzichtet werden kann.

Diese Aufgabe wird erfindungsgemäß durch ein Befestigungselement gelöst, wie es im Patentanspruch 1 definiert ist, sowie durch ein Verfahren zum Fixieren eines Befestigungselements, wie es in den Verfahrensansprüchen definiert ist.

Die Erfindung stellt ein Befestigungselement und ein Verfahren zur Befestigung eines Befestigungselements bereit, das sich bei geeigneter Ausgestaltung durch eine einfache Handhabung, besonders kostengünstige Herstellung, Zeitersparnis bei der Montage und Gewichtsreduzierung auszeichnet. Insbesondere wird die Möglichkeit geschaffen, metallische Komponenten von Verbindungselementen durch Kunststoff in Bereichen zu ersetzen, die bislang für Kunststoff nicht erschlossen waren, obwohl das erfindungsgemäße Befestigungselement beispielsweise auch ganz oder zum Teil metallisch ausgebildet sein kann. Das Befestigungselement kommt ohne Gewinde aus, wie sie bei den Kombinationen Schraube/Mutter und Schraube/Dübel zur Erzielung eines Kraftschlusses notwendig sind. Beim erfindungsgemäßen Befestigungselement erfolgt eine Fixierung des in der Hülse beweglichen Ankers durch geeignete Sperren, die bereits in der Materialwahl von Hülse und Anker liegen können. Aufgrund der vorgeschlagenen Lösung wird erreicht, daß das bisher nachteilige Kriechverhalten des Kunststoffs die Befestigungsfunktion nicht mehr beeinflußt. Ebenso können die Vorteile des Werkstoffs Kunststoff (hohe Zugfestigkeit) beim vorgeschlagenen Befestigungselement voll zur Wirkung kommen. Ferner besitzt das Befestigungselement eine besonders hohe Resistenz gegenüber Schwingungen. Dadurch können Einsatzbereiche erschlossen werden, die bisher einer Schraubverbindung mit zusätzlicher Sicherung, wie Konterung, vorbehalten waren.

Weitere Vorteile, Merkmale und Anwendungsmöglichkeiten der vorliegenden Erfindung ergeben sich aus der nachfolgenden Beschreibung von Ausführungsbeispielen in Verbindung mit den Zeichnungen.

Es zeigen:
- Fig. 1: eine Schnittdarstellung einer Ausführungsform des erfindungsgemäßen Befestigungselementes, das in einer Bohrung eingebracht ist;
- Fig. 2: eine Schnittdarstellung der Hülse einer Ausführungsform der vorliegenden Erfindung, die Außerrippen 3 aufweist;
- Fig. 3: eine Draufsicht auf einen Anker 2 einer Ausführungsform der vorliegenden Erfindung, die einen Anker mit einem keilförmigen Abschnitt und einen mit Rippen 7 versehenen Zugabschnitt 6 aufweist;
- Fig. 4: eine Seitenansicht der Ausführungsform gemäß Fig. 3;
- Fig. 5: eine Draufsicht auf den Anker 2 gemäß der Ausführungsform nach den Figuren 3 und 4, die einen pyramidenförmig zulaufenden Abschnitt und eine bandförmige, gerippte Zugeinrichtung 6 aufweisen;
- Fig. 6: ein Lagerelement 5 mit einem metallischen Fixierplättchen 8 nach einer Ausführungsform der Erfindung;
- Fig. 7: ein Lagerelement 5 mit Klemmwulst 4 einer Ausführungsform der vorliegenden Erfindung;
- Fig. 8: ein Lagerelement 5, das gemäß einer Ausführungsform der vorliegenden Erfindung einen Durchlaß für die Zugeinrichtung 6 und eine Fixierplatte 8 aufweist;
- Fig. 9: ein Befestigungselement gemäß einer Ausführungsform der vorliegenden Erfindung, das zwei Anker aufweist,
- Fig. 10: ein Befestigungselement gemäß einer Ausführungsform der vorliegenden Erfindung, das zwei mit einer Zugeinrichtung 6 aufeinander zu gezogene Anker aufweist,
- Fig. 11: ein Befestigungselement gemäß einer Ausführungsform der vorliegenden Erfindung, das zwei mit einer Zugeinrichtung 6 aufeinander zu gezogene Hülsen aufweist,
- Fig. 12: ein Befestigungselement gemäß einer Ausführungsform der vorliegenden Erfindung, das zusätzlich ein Verstärkungselement 15 aufweist, und
- Fig. 13: ein Befestigungselement gemaß einer Ausführungsform der vorliegenden Erfindung, das einen Abstandshalter 16 und ein Höhenausgleichselement 17, speziell für Rohre, sowie eine Toleranzausgleichseinrichtung 19 umfaßt.

In einer bevorzugten Ausführungsform weist das Befestigungselement ein bewegliches Lagerelement 5 mit Verriegelungseinrichtung auf. Das Lagerelement 5 nimmt die vorzugsweise bandförmig geformte Zugeinrichtung 6 des Ankers 2 auf. Beim Befestigungsvorgang erfolgt eine Relativbewegung zwischen der Zugeinrichtung 6 und dem Lagerelement 5, wobei durch die Verriegelungseinrichtung eine entgegengesetzte Relativbewegung zwischen Lagerelement 5 und Anker 2 verhindert wird. Diese Verriegelungseinrichtung kann so ausgestaltet sein, daß eine Entriegelung, d. h. ein Lösen des Ankers 2 vom Lagerelement 5, möglich ist. Beispielsweise können als Verriegelungseinrichtung eine Sperrzunge oder ein Fixierplättchen 8 als Rutschsperre ausgebildet sein, die entweder durch einen Schraubendreherschlitz oder durch eine besondere Ausgestaltung, z.B. der Sperrzunge, manuell entriegelt werden können. In diesem Fall ist es vorteilhaft, die Zugeinrichtung 6 mit einer Zahnung/Textur auf mindestens einer Seite zu versehen. Auch das sogenannte Totpunktschloß ist u. a. als Verriegelungseinrichtung in der vorliegenden Erfindung einsetzbar.

Vorzugsweise besitzt das Lagerelement 5 einen größeren Durchmesser als das Bohrloch, in das das Befestigungselement eingebracht wird, bzw. als der Durchlaß eines zu befestigenden Objekts. Dieses wird beim Befestigungsvorgang bei der Relativbewegung zwischen Zugeinrichtung 6 und Lagerelement 5 gegen die Fläche, in der sich das Bohrloch befindet, gepreßt, während gleichzeitig durch das Ziehen der Zugeinrichtung 6 der Anker 2 in Richtung aus dem Bohrloch in der Hülse über einen Abschnitt axial bewegt wird und dadurch die Hülse 1 gegen die Bohrlochwandung preßt.

In einer Ausführungsform ist der Anker 2, z.B. über einen Steg, an der Hülse 1 angeformt. Vor bzw. bei dem Einführen des Ankers 2 in die Hülse 1, wird der Steg bzw. der Anker gegebenenfalls abgeknickt oder von der Hülse 1 abgerissen.

In einer bevorzugten Ausführungsform ist das Lagerelement 5 zum Anbringen von Objekten am Lagerelement 5 ausgebildet. Lagerelemente können so ausgestaltet sein, daß sie Funktionselemente wie Haken, Ösen, Abdeckkappen, Konsolen, Distanzstücke/Abhängungen und dergleichen aufnehmen und somit an Systeme angekoppelt werden können. Auch kann am Lagerelement 5 eine Verlängerungsaufnahme vorgesehen werden, damit ein zusätzlicher Anker 2 zum erfindungsgemäßen Ankoppeln an eine weitere Hülse 1 realisierbar ist (Doppelschloß).

Ferner kann der aus der Bohrung ragende Abschnitt der Zugeinrichtung 6 zum Anbringen von Gegenständen an der Zugeinrichtung 6 ausgestaltet sein. Die Zugeinrichtung 6 kann beispielsweise Haken oder Ösen zum Anbringen von Objekten, wie z.B. eines Bildes, aufweisen.

In einer weiteren Ausführungsform nimmt die Hülse 1 einen zweiten Anker 9 an der dem ersten Anker 2 entgegengesetzten Seite auf. Damit kann das Befestigungselement als Verbindungselement zwischen zwei Gegenständen, z.B. zwei Schrankwänden, eingesetzt werden.

Insbesondere kann die Hülse des Befestigungselements mit einer Abstützvorrichtung 14, insbesondere einem Steg, versehen sein. Durch zwei solcher sich gegenüberliegenden Hülsen 1 bzw. einer zweiteilig ausgebildeten Hülse 1 können nun zu fixierende Objekte 12 miteinander verbunden werden, wobei eine ankerartige Fixiervorrichtung 8 mit der Zugeinrichtung 6 beim Anziehen verzahnt wird und so die beiden Hülsen aufeinander zu bewegt. Auf diese Weise kann zwischen den Abstützvorrichtungen der beiden Hülsen ein zu fixierendes Objekt, z.B, zwei Regal- oder Schrankwände, mit Hilfe dieser Klammerwirkung fixiert werden.

In einer zusätzlichen Ausführungsform ist der zweite Anker 9 derart mit einer Zugeinrichtung 6 versehen, daß diese am ersten Anker 2 umgelenkt wird, so daß sich die Zugeinrichtung 6 in Richtung aus der Bohrung heraus erstreckt. Beim Betätigen der Zugeinrichtung werden dann auf beide Anker, jeweils in Richtung auf den anderen Anker zu, Kräfte ausgeübt und aufeinander zu bewegt. Der zweite Anker 9 wird vorzugsweise zum Abschließen der Bohrung eingesetzt, um das Befestigungselement oder die Bohrung vor äußeren Einflüssen zu schützen. Vorzugsweise wird die Außenoberfläche des zweiten Ankers 9 mit einer Feuerschutzpanzerung 11 aus einem feuerfesten Material versehen. Derartige Materialien sind dem Fachmann bekannt, wobei bevorzugt ein glasfaser- und wasserhaltiges, bei Hitzeeinwirkung aufschäumendes Natriumsilikat eingesetzt werden kann, das im Handel unter dem Namen Palusol® (BASF AG) erhältlich ist.

Erfindungsgemäß kann in einem Ausführungsbeispiel zwischen dem Anker 2 und der Fixiervorrichtung 8 bzw. der Feuerschutzpanzerung 11 ein Verstärkungselement 15 angeordnet sein. Dieses Verstärkungselement 15 dient vorzugsweise dazu, Kräfte aufzunehmen, die senkrecht zur Achse der Zugeinrichtung 6 auftreten. Dadurch, daß das Verstärkungselement 15 als zylindrische Hülse ausgebildet ist, deren eines Ende sich verjüngt und geeignet ist, teilweise in die Bohrung bzw. Hülse 1 hineinzuragen, werden die auf das Verstärkungselement 15 ausgeübten Kräfte auf die Innen- und/oder Außenwandungen der Bohrungen übertragen. Diese erfindungsgemäße Weiterentwicklung erweitert das Einsatzgebiet des erfindungsgemäßen Befestigungselements insbesondere auf solche Fälle, in denen Kräfte vor allem senkrecht zur Achse der Zugeinrichtung wirken. Beispielhaft erwähnt seien hier an einer Wand zu befestigende Waschtische, Paneele, frei an einer Wand hängende schwere Gegenstände wie Bilder, Plastiken, Werkzeugschränke, etc. Durch die Verwendung der Abstützvorrichtungen können vor allem auch schwerere Wandverkleidungen problemlos auch mit Abstand von der Wand fixiert werden. Auf diese Weise kann das Verstärkungselement auch als Abstandshalter fungieren.

Eine weitere Ausführungsform des erfindungsgemäßen Gegenstands ist ein Befestigungselement, das zwischen der Hülse 1 und der Fixiervorrichtung 8 einen Abstandshalter 16 aufweist. Dieser Abstandshalter 16 kann eingesetzt werden, um z.B. bei Wandverkleidungen den notwendigen Abstand zur Luftzirkulation zwischen Wand und Verkleidung sicherzustellen, Überputzrohre an Wänden oder Decken mit Abstand zu diesen zu verlegen, oder Kabelkanäle oder Zwischendecken von der Decke abzuhängen. Eine vorteilhafte Weiterentwicklung der erfindungsgemäßen Abstandshalter ist darin zu sehen, daß zwischen der Hülse 1 und dem Abstandshalter 16 eine Toleranzausgleichseinrichtung 19 vorgesehen ist. Diese Toleranzausgleichseinrichtung 19 sorgt dafür, daß die eingebrachten Bohrungen nicht exakt z.B. mit dem Verlauf eines Rohres übereinstimmen müssen, und es ermöglicht wird, daß die in der Wand befindliche Hülse nicht unbedingt senkrecht mit der Fixiervorrichtung ausgerichtet sein muß, d.h. keine gemeinsame Achse haben muß. Dazu ist z.B. das zum Abstandshalter benachbart liegende Ende der Hülse 1 kugelabschnittsförmig ausgebildet, wobei der Abstandshalter selbst am der Hülse zugewandten Ende komplementärkugelförmig ausgebildet ist. Somit entsteht eine Vorrichtung, die, zusammengehalten durch die Zugeinrichtung 6, grundsätzlich in Maßen flexibel ist und es erlaubt, daß die Achse des Abstandshalters und die Achse der Hülse nicht parallel sein müssen.

Ferner kann die mit der Zugeinrichtung 6 in Eingriff zu bringende Fixiervorrichtung 8 mit Einrichtungen ausgestattet sein, die zum Anbringen von Gegenständen an dieser Fixiervorrichtung 8, wie z.B. Haken, Ösen, Rohrfixierungen, Schlaufen oder Greifer geeignet sind.

In einer bevorzugten Ausführungsform ist die Objektbefestigungsvorrichtung eine Rohrfixierung, insbesondere in der Art eines Kabelbinders, die mit einer Höhenausgleichseinrichtung 17 ausgestattet ist. Diese Höhenausgleichseinrichtung 17 kann beispielsweise ein quasi elliptisch ausgebildetes Element sein, in dem nicht konzentrisch eine kreisförmige Öffnung vorgesehen ist. Diese kreisförmige Öffnung ist so ausgebildet, daß sie ein Rohr aufnehmen kann, das dann durch Drehen des quasi elliptisch ausgebildeten Elements in seinem Abstand zur Hülse verändert bzw. ausgeglichen werden kann. Dadurch wird die Montage nicht nur vereinfacht, sondern es kann durch so ausgebildete Objektbefestigungsvorrichtungen, die derartige Höhenausgleichselemente umfassen, der vertikale Abstand bezüglich des zu befestigenden Gegenstands variiert werden. Außerdem kann durch die Objektbefestigungsvorrichtung vorteilhafterweise eine schalldämpfende Wirkung erzielt werden, indem beispielsweise Fließgeräusche des Mediums in den Rohren nicht auf die Wand übertragen werden.

Als zur Herstellung des Befestigungselements geeignete thermoplastische und elastomere Materialien seien beispielhaft genannt:
Polyolefine, wobei Polyethylen- und Polypropylenhomo- oder -copolymerisate bevorzugt sind,
Polystyrolhomo- oder -copolymerisate einschließlich ABS, SAN, ASA oder HIPS-Polymerisaten,
Polyvinylchloride, Polyamide, Polymethylmethacrylate, Polyphenylenether, Polyethersulfone, Polyetherketone, gesättigte und ungesättigte Polyesterharze, LCP-Polymere, Polycarbonate, Polyphenylensulfide, Polyoxymethylene, Polyurethane, insbesondere thermoplastische Polyurethane.

Ebenso sind Blends dieser Polymere (Mischungen) geeignet, wobei es sich von selbst versteht, daß je nach Anwendung die Polymeren übliche Zusatz- und Verarbeitungshilfsmittel enthalten können wie faser- oder teilchenförmige Füllstoffe, Kautschuke, Flammschutzadditive, Stabilisatoren oder Gleitmittel.

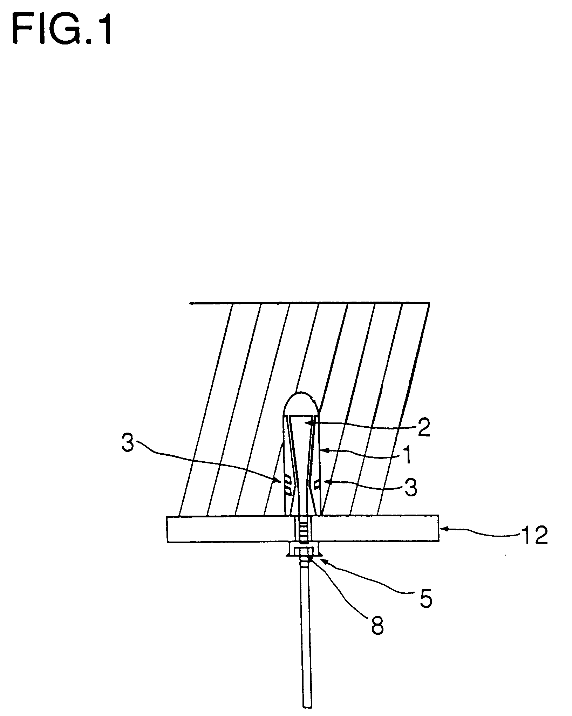

In Fig. 1 bis 8 ist ein Befestigungselement gemäß einem ersten Ausführungsbeispiel der vorliegenden Erfindung gezeigt, das in eine Bohrung eingebracht ist. Das Befestigungelement weist eine spreizbare Hülse 1 auf, die sich von Richtung der Bohrlochsohle in Richtung aus der Bohrung heraus verjüngt. Vor dem Einsetzen in die Bohrung wird der Anker 2 in die Hülse 1 eingesetzt. Dieser Anker weist einen keilförmigen Abschnitt auf, der zum Einpassen in den sich verjüngenden Innenabschnitt der Hülse bestimmt ist. Der Anker weist zusätzlich eine aus dem Bohrloch herausragende Zugeinrichtung 6 auf, die abschnittsweise eine Rippung aufweist. Auf einem zu befestigenden Objekt, das eine Bohrung aufweist, ist ein Lagerelement 5, das eine Verriegelungseinrichtung besitzt, angesetzt.

Beim Verriegelungsvorgang wird an der Zugeinrichtung in Richtung vom Bohrloch weg gezogen und eine Relativbewegung zwischen Lagerelement 5 und dem Anker 2 verursacht. Dadurch wird ein zu befestigendes Objekt 12 an die das Bohrloch enthaltende Wand gepreßt. Ein Zurückgleiten von Anker 2 bzw. Lagerelement 5 wird von der Verriegelungseinrichtung des Lagerelements 5 verhindert, das in Eingriff mit den Rippen der Zugeinrichtung 6 steht. Durch das axiale Bewegen des Ankers 2 in Richtung aus dem Bohrloch heraus wird eine radiale Kraft auf die Hülse 1 ausgeübt, wodurch diese gespreizt und somit in der Bohrung fixiert wird. Die Fixierung wird in diesem Ausführungsbeispiel durch Außenrippen 3 der Hülse zusätzlich unterstützt.

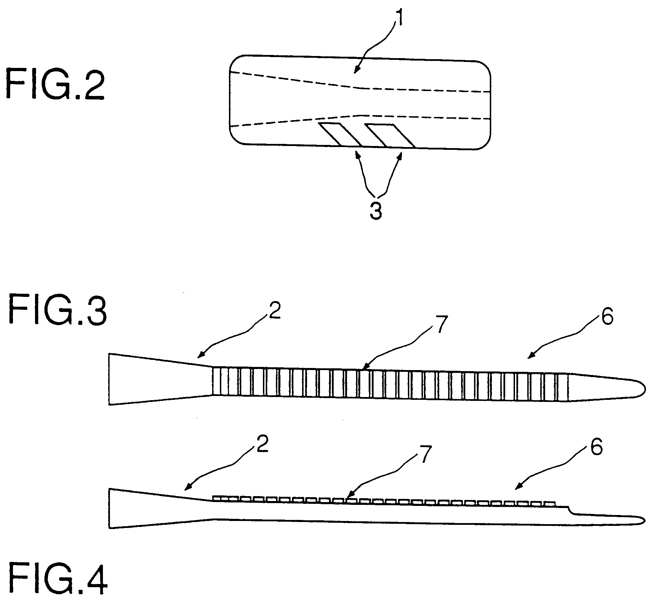

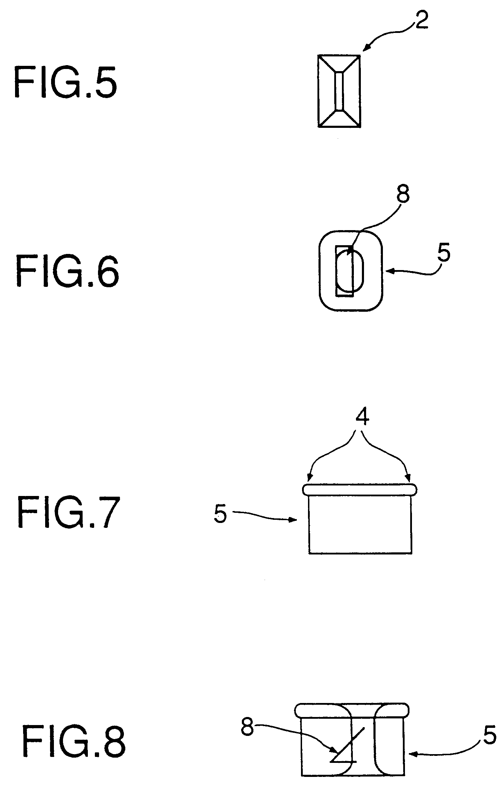

Die Fig. 2 bis 5 illustrieren die Gestaltung der spreizbaren Hülse 1 und des Ankers 2. Fig. 6 zeigt die Verriegelungseinrichtung des Lagerelements 5 dieses Ausführungsbeispiels. Es handelt sich dabei um ein Fixierplättchen aus Metall, das als Rutschsperre für die Zugeinrichtung 6 dient.

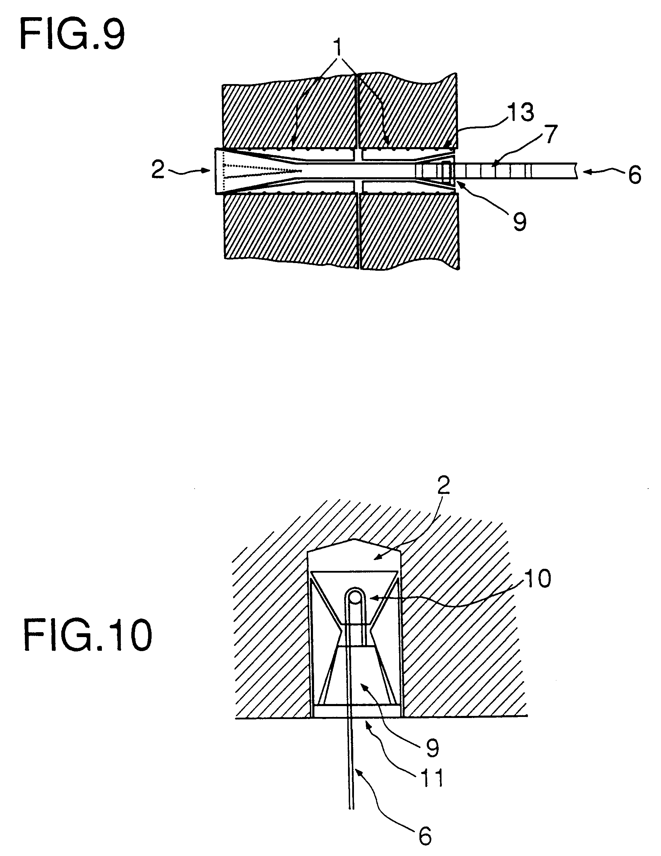

Ein weiteres Ausführungsbeispiel gemäß Fig. 9 weist eine Hülse auf, die einen zweiten sich zum Zentrum der Hülse hin verjüngenden Innenabschnitt besitzt. Die sich verjüngenden Innenabschnitte verjüngen sich jeweils von entgegengesetzten Seiten zur Mitte hin. Der zweite sich verjüngende Innenabschnitt ist zur Aufnahme eines zweiten Ankers 9 bestimmt. Der zweite Anker 9 besitzt im Gegensatz zum ersten Anker 2 keine Zugeinrichtung 6. Die Hülse 1 ist zweistückig ausgebildet und besitzt eine Fischschuppenoberfläche. Die zwei Hülsenstücke sind in zwei miteinander zu koppelnde Objekte eingeführt worden, bevor die Objekte aneinandergefügt wurden. Der die Zugeinrichtung aufweisende erste Anker 2 kann entweder vor dem Aneinanderfügen der beiden zu koppelnden Objekte zusammen mit der Hülse eingesetzt werden oder, wenn die Bohrung durch das ganze Objekt geführt ist, auch nach dem Aneinanderfügen der Objekte entweder separat oder zusammen mit der Hülse eingesetzt werden. Die Befestigung erfolgt dann mittels eines (in Fig. 9 nicht dargestellten) Lagerelements 5, das eine Verriegelungseinrichtung besitzt. Das Lagerelement 5 ist so ausgestaltet, daß es bei der Relativbewegung zur Zugeinrichtung 6 des ersten Ankers ein Widerlager für den zweiten Anker 9 bildet und diesen ggf. in Richtung in die Hülse 1 hineindrückt.

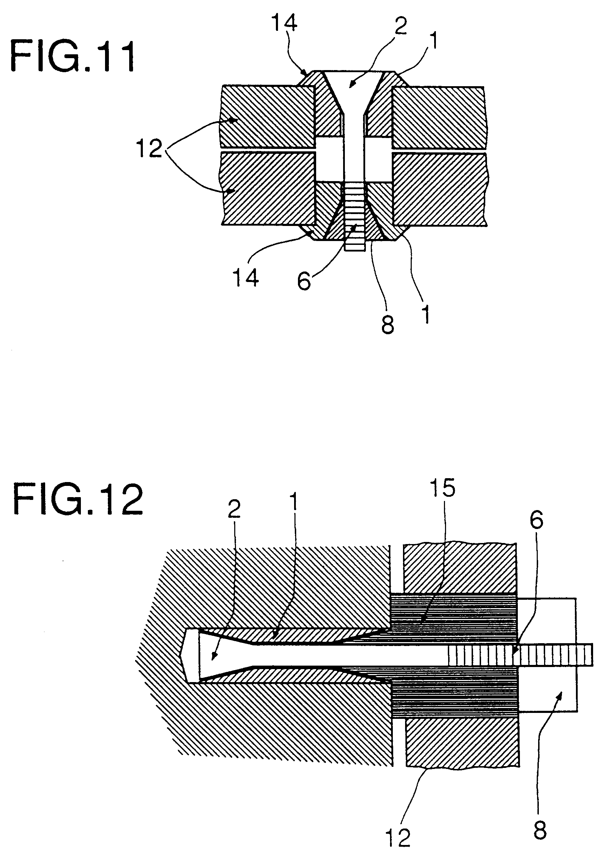

Fig. 10 zeigt ein weiteres Ausführungsbeispiel des erfindungsgemäßen Befestigungselements, das z.B. als Deckenabhängung praktische Anwendung finden könnte. Hierbei weist eine einstückige Hülse zwei sich zum Zentrum hin, von entgegengesetzten Seiten her, verjüngende Innenabschnitte auf. Der von der Bohrungsöffnung in Richtung des Hülsenmittelpunkts weisende zweite Anker 9 besitzt eine Zugeinrichtung 6, die am ersten Anker 2 in Richtung aus der Bohrung heraus umgelenkt wird. Beim Ziehen der Zugeinrichtung 6 werden beide Anker (2, 9) aufeinanderzu bewegt und üben dabei Kräfte in radialer Richtung auf die Hülse aus. Die Arretierung der beiden Anker kann dabei über die Gestaltung der Oberflächen von Hülse und Anker (2, 9) bzw. der Materialwahl oder über eine Verriegelung der Zugeinrichtung 6 in bereits beschriebener Weise erfolgen. In Fig. 10 besitzt der zweite Anker 9 eine Feuerschutzpanzerung, z.B. Palusol®, die das Befestigungselement vor Hitzeeinwirkung schützen soll, das auf diese Weise den Anforderungen von Feuerschutzbestimmungen genügt.

In Fig. 11 ist dargestellt, wie mit Hilfe der zweiteilig ausgeführten spreizbaren Hülse anhand der Abstützvorrichtung 14 eine Klammerwirkung erzielt werden kann, mit der beispielsweise aneinandergrenzende Schrankwände, zu leimende Holzpaneele, etc. miteinander verbunden werden können. Durch die Abstützvorrichtung 14, die hier als Steg realisiert wurde, werden die Hülsen 1 an dem zu fixierenden Objekt abgestützt. Durch das Anziehen des Ankers 2 sowie das Verzahnen der Zugeinrichtung 6 mit der Fixiervorrichtung 8 werden die beiden Hülsen 1 aufeinander zu bewegt und üben so eine Klammerwirkung auf die zu fixierenden Objekte aus.

In Fig. 12 ist ein weiteres Ausführungsbeispiel der vorliegenden Erfindung dargestellt, bei dem ein Verstärkungselement 15 verwendet wird. Dieses Verstärkungselement ist hinter der spreizbaren Hülse angeformt bzw. selbständig ausgebildet und wird durch das Anziehen der Zugeinrichtung 6 zwischen der Fixiervorrichtung 8 und der Hülse 1 fixiert. Dieses Verstärkungselement 15 ist in der Zeichnung zylindrisch ausgeformt, wobei an dem der Hülse zugewandten Ende eine konische Erweiterung derart ausgeformt ist, daß diese teilweise in die Bohrung bzw. Hülse hineinragt. Ein zu befestigendes Objekt 12 kann nun auf diesem Verstärkungselement 15 befestigt werden, wobei die Kräfte durch das Verstärkungselement 15 auf die Innenwand der Bohrung, respektive der Hülse sowie vor allem auf die Außenwand abgeleitet werden.

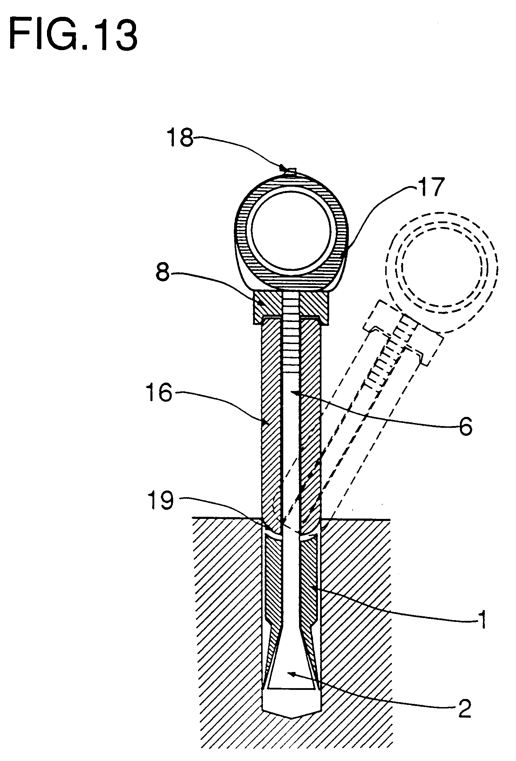

Fig. 13 stellt ein weiteres Ausführungsbeispiel der vorliegenden Erfindung dar, das einen Abstandshalter und eine Höhenausgleichseinrichtung umfaßt. Zwischen Hülse 1 und Fixiervorrichtung 8 ist ein Abstandhalter 16 vorgesehen, der über die Zugeinrichtung mit der Hülse und der Fixiervorrichtung verbunden ist. Zwischen dem Abstandhalter 16 und der Hülse 1 ist eine Toleranzausgleichseinrichtung 19 vorgesehen, wobei die Hülse oben abgerundet ist, mit der komplementär abgerundeten Seite des Abstandhalters 16 angrenzend in Berührung steht und so für den Toleranzausgleich der Abstandshalter in die gestrichelt eingezeichnete Position verbogen werden kann. Ein derart verbogener Toleranzausgleich in der gestrichelten Position übt auch keine dauernden Rückstellkräfte insbesondere auf das zu befestigende Rohr aus. An der Fixiervorrichtung 8 ist eine Objektbefestigungsvorrichtung 18, hier ein Kabelbinder, angebracht. In dieser Befestigungsvorrichtung 18 integriert ist ein Höhenausgleichselement 17. Das Höhenausgleichselement 17 ist elliptisch ausgebildet und erlaubt so durch Verdrehen, den Abstand des Rohrs von der Wand zu variieren. Außerdem ist das Höhenausgleichselement 17 mit einem schalldämmenden Material versehen.

### Bezugszeichenliste

- 1: spreizbare Hülse
- 2: Anker
- 3: Außenrippe der Hülse (1)
- 4: Klemmwulst
- 5: Lagerelement
- 6: Zugeinrichtung
- 7: Zahnung/Textur der Zugeinrichtung
- 8: Fixier(plättchen)vorrichtung
- 9: zweiter Anker
- 10: Umlenkeinrichtung
- 11: Feuerschutzpanzerung
- 12: zu befestigendes Objekt
- 13: Fischschuppenoberfläche
- 14: Abstützvorrichtung
- 15: Verstärkungselement
- 16: Abstandshalter
- 17: Höhenausgleichselement
- 18: Objektbefestigungsvorrichtung (z.B. Rohrfixierung)
- 19: (Toleranz)ausgleichseinrichtung

## Patentansprüche

1. Befestigungselement zum Einbringen in eine Bohrung, welches aufweist:
- eine spreizbare Hülse (1) und
- einen axial beweglichen Anker (2),
wobei die Hülseninnenfläche und die Ankeraußenfläche so gestaltet sind, daß der Anker (2) bei seiner axialen Relativbewegung zur Hülse (1) in Richtung aus der Bohrung heraus derart radiale Kräfte auf die spreizbare Hülse (1) ausübt, daß die Hülse (1) in der Bohrung fixiert wird.

2. Befestigungselement nach Anspruch 1, **dadurch gekennzeichnet,** daß
- die spreizbare Hülse (1) einen Innenabschnitt aufweist, der sich in axialer Richtung aus der Bohrung heraus verjüngt, und
- der axial bewegliche Anker (2) eine Zugeinrichtung (6) zum Ausüben einer Zugkraft auf den Anker in axialer Richtung aus der Bohrung heraus aufweist, wobei der Anker (2) bei seiner axialen Bewegung derart radiale Kräfte auf die spreizbare Hülse (1) ausübt, daß die Hülse (1) in der Bohrung fixiert wird.

3. Befestigungselement nach Anspruch 1 oder 2, **dadurch gekennzeichnet,** daß die Hülse (1) an ihrer Innenseite und/oder ihrer Außenseite eine Verrippung aufweist.

4. Befestigungselement nach einem der Ansprüche 1 bis 3, **dadurch gekennzeichnet,** daß die Hülse (1) an ihrer Innenseite Führungsnuten für den Anker aufweist.

5. Befestigungselement nach einem der Ansprüche 1 bis 4, **dadurch gekennzeichnet,** daß der sich verjüngende Innenabschnitt der Hülse (1) pyramidenförmig oder konusförmig ausgebildet ist.

6. Befestigungselement nach einem der Ansprüche 1 bis 5, **gekennzeichnet durch** eine Verriegelungseinrichtung zum Fixieren des Ankers (2).

7. Befestigungselement nach Anspruch 6, **dadurch gekennzeichnet,** daß die Verriegelungseinrichtung als Teil der Hülse ausgebildet ist.

8. Befestigungselement nach einem der Ansprüche 1 bis 7, **gekennzeichnet durch** ein Lagerelement (5) mit Verriegelungseinrichtung zur Fixierung der Zugeinrichtung (6).

9. Befestigungselement nach Anspruch 8, **dadurch gekennzeichnet,** daß der Außendurchmesser des Lagerelements (5) größer als der Durchmesser der Bohrung ist.

10. Befestigungselement nach Anspruch 8 oder 9, **dadurch gekennzeichnet,** daß das Lagerelernent (5) als von der Hülse (1) separates, vorzugsweise auf ein zu befestigendes Objekt aufbringbares, Teil ausgestaltet ist.

11. Befestigungselement nach einem der Ansprüche 1 bis 10, **gekennzeichnet durch** eine Zugeinrichtung (6), die auf einer oder mehreren Seiten Mittel zum Verhindern einer axialen Zurückbewegung des Ankers in Richtung in die Bohrung hinein aufweist.

12. Befestigungselement nach Anspruch 11, **dadurch gekennzeichnet,** daß die Mittel zum Verhindern einer axialen Zurückbewegung des Ankers als Textur oder als Vorsprünge, insbesondere Zahnung (7), ausgebildet sind.

13. Befestigungselement nach einem der Ansprüche 2 bis 12, **dadurch gekennzeichnet,** daß die Zugeinrichtung (6) mindestens über einen Abschnitt bandförmig gestaltet ist.

14. Befestigungselement nach einem der Ansprüche 6 bis 13, **dadurch gekennzeichnet,** daß die Verriegelungseinrichtung eine oder mehrere im wesentlichen in Zugrichtung zeigende Zungen aufweist.

15. Befestigungselement nach einem der Ansprüche 6 bis 14, **dadurch gekennzeichnet,** daß die Verriegelungseinrichtung mindestens ein Fixierplättchen (8) als Rutschsperre aufweist.

16. Befestigungselement nach einem der Ansprüche 6 bis 15, **dadurch gekennzeichnet,** daß die Verriegelungsvorrichtung entriegelbar ausgebildet ist.

17. Befestigungselement nach einem der Ansprüche 2 bis 16, **dadurch gekennzeichnet,** daß die Zugeinrichtung (6) zum Anbringen von Gegenständen an der Zugeinrichtung (6) außerhalb der Bohrung ausgebildet ist.

18. Befestigungselement nach einem der Ansprüche 8 bis 17, **dadurch gekennzeichnet,** daß das Lagerelement selbst zum Anbringen von Gegenständen an diesem ausgebildet ist.

19. Vorrichtung nach einem der Ansprüche 1 bis 18, **dadurch gekennzeichnet,** daß der Anker (2) mindestens über einen Teil seiner Länge als Kegel oder pyramidenförmig ausgebildet ist.

20. Befestigungselement nach einem der Ansprüche 1 bis 19, **dadurch gekennzeichnet,** daß mindestens der Anker (2) aus einem beschränkt verformbaren bzw. nachgiebigen Werkstoff besteht.

21. Befestigungselement nach einem der Ansprüche 1 bis 20, **dadurch gekennzeichnet,** daß wenigstens der Anker (2) oder die Hülse (1) aus einem thermoplastischen oder elastomeren Material besteht.

22. Befestigungselement nach einem der Ansprüche 1 bis 21, **dadurch gekennzeichnet,** daß der Anker (2) einstückig derart an der Hülse (1) angeformt und ausgebildet ist, daß er vor dem Befestigungsvorgang in die Hülse (1) einführbar ist.

23. Befestigungselement nach einem der Ansprüche 1 bis 22, **dadurch gekennzeichnet,** daß die Hülse (1) einen zweiten Anker (9) an der dem ersten Anker (2) entgegengesetzten Seite aufnimmt.

24. Befestigungselement nach Anspruch 23, **dadurch gekennzeichnet,** daß der zweite Anker (9) eine Verriegelungseinrichtung zum Fixieren der Zugeinrichtung (6) des ersten Ankers aufweist.

25. Befestigungselement nach einem der Ansprüche 23 oder 24, **dadurch gekennzeichnet,** daß die Hülse (1) einen sich zum Zentrum der Hülse hin verjüngenden Innenabschnitt zur Aufnahme des zweiten Ankers (9) aufweist.

26. Befestigungselement nach einem der Ansprüche 23 bis 25, **dadurch gekennzeichnet,** daß das Lagerelement (5) derart ausgestaltet ist, daß es beim Ziehen der Zugeinrichtung (6) relativ zu der Hülse (1) bewegt werden kann und bei der Relativbewegung Druckkräfte auf den zweiten Anker (9) ausübt.

27. Befestigungselement nach einem der Ansprüche 23 bis 26, **dadurch gekennzeichnet,** daß die Hülse (1) zweistückig ausgebildet ist.

28. Befestigungselement nach Anspruch 27, dadurch gekennzeichnet, daß mindestens ein Hülsenteil mit einer Abstützvorrichtung (14), insbesondere mit einem Steg, versehen ist.

29. Befestigungselement nach einem der Ansprüche 27 oder 28, dadurch gekennzeichnet, daß die verschiedenen Teile der Hülse (1) durch das Ziehen der Zugeinrichtung aufeinander zu bewegt werden, wobei zu fixierende Objekte (12) mittels der Abstützvorrichtungen (14) miteinander verbunden werden.

30. Befestigungselement nach einem der Ansprüche 23 bis 29, **dadurch gekennzeichnet,** daß der zweite Anker (9) eine Zugeinrichtung (6) aufweist, die bei Betätigung eine Zugkraft auf den zweiten Anker (9) in axialer Richtung in die Bohrung hinein ausübt, und daß die Zugeinrichtung in Richtung aus der Bohrung heraus am ersten Anker (2) umgelenkt wird.

31. Befestigungselement nach Anspruch 34, **dadurch gekennzeichnet,** daß der Anker (2) eine Umlenkeinrichtung (10) aufweist, an der die Zugeinrichtung des zweiten Ankers (9) umgelenkt wird, wobei die Umlenkeinrichtung (10) und die Zugeinrichtung des zweiten Ankers derart miteinander in Eingriff stehen, daß die Zugeinrichtung auf den ersten Anker (2) eine Zugkraft in axialer Richtung aus der Bohrung heraus ausübt.

32. Befestigungselement nach einem der Ansprüche 8 bis 31, **dadurch gekennzeichnet,** daß das Lagerelement (5) eine Feuerschutzpanzerung (11) zum Schutz des Befestigungselements aufweist.

33. Befestigungselement nach einem der Ansprüche 1 bis 32, dadurch gekennzeichnet, daß zwischen dem Anker (2) und der Fixiervorrichtung (8) ein Verstärkungselement (15) angeordnet ist.

34. Befestigungselement nach Anspruch 33, dadurch gekennzeichnet, daß das Verstärkungselement eine zylindrische Hülse ist, deren eines Ende sich verjüngt und geeignet ist, teilweise in die Bohrung hineinzuragen und/oder sich an der Bohrungsaußenwand abzustützen.

35. Befestigungselement nach einem der Ansprüche 1 bis 34, dadurch gekennzeichnet, daß zwischen der Hülse (1) und der Fixiervorrichtung (8) ein Abstandshalter (16) vorgesehen ist.

36. Befestigungselement nach Anspruch 35, dadurch gekennzeichnet, daß zwischen Abstandshalter (16) und Hülse (1) eine Toleranzausgleichseinrichtung (19) vorgesehen ist.

37. Befestigungselement nach einem der Ansprüche 1 bis 36, dadurch gekennzeichnet, daß die Fixiervorrichtung (8) mindestens eine Objektbefestigungsvorrichtung (18), insbesondere eine Rohrfixierung, umfaßt.

38. Befestigungselement nach Anspruch 37, dadurch gekennzeichnet, daß die Objektbefestigungsvorrichtung mit einer Höhenausgleichseinrichtung ausgestattet ist.

39. Befestigungselement nach Anspruch 38, dadurch gekennzeichnet, daß die Höhenausgleichseinrichtung ein quasielliptisch ausgebildetes Element umfaßt, in dem nichtkonzentrisch eine kreisförmige Öffnung vorgesehen ist.

40. Verfahren zum Fixieren eines Befestigungselements in einer Bohrung, welches die Schritte aufweist:
- Einbringen einer spreizbaren Hülse (1) und eines Ankers (2) in eine Bohrung;
- axiales Bewegen des Ankers (2) relativ zur Hülse (1) in Richtung aus der Bohrung heraus, wobei der Anker (2) derart radiale Kräfte auf die spreizbare Hülse (1) ausübt, daß die Hülse (1) in der Bohrung fixiert wird.

41. Verfahren nach Anspruch 40, **dadurch gekennzeichnet,** daß ein Befestigungselement nach einem der Ansprüche 1 bis 39 in der Bohrung befestigt wird.
